# FASCICULE DE BREVET EUROPEEN

(11) **EP 3 930 914 B1**
(45) Date de publication et mention de la délivrance du brevet: **08.10.2025**
(21) Numéro de dépôt: 20706321.5
(22) Date de dépôt: 27.02.2020
(51) Int. Cl.: B05B 9/04, B05B 12/08, F04F 1/06, A62C 3/02, B64D 1/16, B05B 12/00, B05B 13/00

(54) **SYTÈME DE LARGAGE D'UN LIQUIDE**
SYSTEM ZUM TROPFEN EINER FLÜSSIGKEIT
SYSTEM FOR DROPPING A LIQUID

(30) Priorité: 27.02.2019 FR 1901992
(43) Date de publication de la demande: 05.01.2022
(73) Titulaire: Institute National Polytechnique de Toulouse, 31029 Toulouse Cedex 4 (FR); CENTRE NATIONAL DE LA RECHERCHE SCIENTIFIQUE (CNRS), 75016 Paris (FR); Kepplair Evolution, 75001 Paris (FR)
(72) Inventeur: JOUBERT, David, 75001 Paris (FR); LEGENDRE, Dominique, 31400 Toulouse (FR); EHSES, Grégory, 31400 Toulouse (FR)
(74) Mandataire: Casalonga
(86) Numéro de dépôt international: PCT/EP2020/055204
(87) Numéro de publication internationale: WO 2020/174071

(56) Documents cités:
- WO-A1-2010/080957
- US-A- 3 698 480
- US-A- 5 326 053
- US-A1- 2006 260 826

## Description

La présente invention concerne, de manière générale, le largage d'un liquide contenu dans un réservoir et plus particulièrement un système pour un largage d'un liquide contenu dans un réservoir.

Le largage d'un liquide provenant d'un réservoir est particulièrement avantageux dans diverses applications comme la dispersion au sol par moyens aériens d'un retardant dans le domaine de la lutte contre les incendies, de produits à finalité agricole, météorologique ou encore environnementale, mais également dans le domaine de l'industrie.

Les deux procédés de largage de liquide majoritairement utilisés dans la lutte contre les incendies sont le largage par gravité et le largage pressurisé.

Le procédé de largage par gravité repose sur l'ouverture contrôlée d'une trappe du réservoir depuis laquelle le liquide s'échappe progressivement sous l'effet de la gravité. US5326053A divulgue un système de largage selon l'art antérieur.

La vitesse d'écoulement du liquide sortant du réservoir est variable, puisqu'elle est fonction de la hauteur du liquide dans le réservoir. Bien que le débit de sortie du liquide puisse être ajusté, dans une certaine mesure, par le contrôle du pourcentage d'ouverture de la trappe, un tel procédé résulte en une empreinte sur la zone à couvrir qui est inhomogène.

Le largage pressurisé consiste quant à lui à utiliser une source d'air comprimé embarquée, accumulateur ou générateur d'air comprimé afin de compresser le liquide dans le réservoir pour permettre un largage plus régulier du liquide.

Cependant, il conduit à un largage trop violent et, par conséquent, une trop grande dispersion du liquide au sol.

En outre, le largage sous pression pose des problèmes de sécurité liés à la pression élevée de fonctionnement du système qui nécessite une quantité importante d'air comprimé embarquée dans l'avion.

Par ailleurs, la configuration des systèmes de largage de liquide connus conduit à l'apparition de tourbillons de vidange ou vortex au fur et à mesure que la hauteur du liquide dans le réservoir diminue, perturbant l'écoulement du liquide en sortie du réservoir dont la vitesse et le débit diminuent, et transformant le liquide à larguer initialement monophasique en mélange biphasique de gaz et de liquide.

L'invention a donc pour but de remédier à ces inconvénients et de proposer un système de largage de liquide aux performances hydrauliques améliorées, conduisant à un écoulement monophasique et un débit de sortie de liquide constant pour une empreinte au sol efficace et homogène.

Il est donc proposé un système de largage d'un liquide, comprenant un réservoir de stockage du liquide doté d'une zone de sortie de liquide pourvue d'une tuyère de sortie et d'une trappe de largage.

En outre, le système de largage comporte des moyens pour faire varier la pression de l'air dans le réservoir de stockage en fonction de la hauteur de liquide dans le réservoir.

Le réservoir de stockage comprend une zone de stockage cylindrique à base ronde et une zone de sortie de liquide conique.

Avantageusement, les moyens pour faire varier la pression de l'air dans le réservoir peuvent comprendre un diffuseur d'air sous pression apte à répartir l'alimentation en air sur la surface du liquide.

Selon un mode de réalisation, le diffuseur d'air comprend un disque disposé dans le réservoir de stockage en aval et à distance d'une arrivée d'air et perpendiculaire à ladite arrivée d'air.

Selon un autre mode de réalisation, le diffuseur d'air peut comprendre au moins un tube disposé perpendiculairement à une arrivée d'air alimentant le diffuseur en air.

Selon un autre mode de réalisation, le diffuseur d'air peut comprendre au moins deux tubes disposés perpendiculairement à une arrivée d'air alimentant le diffuseur en air, les tubes étant disposés de sorte que les axes longitudinaux des tubes forment entre eux un angle non nul.

Selon un mode de réalisation, le diffuseur d'air sous pression a une forme de spirale.

Selon un mode de réalisation, la tuyère de sortie peut être coudée.

Avantageusement, le système de largage peut comprendre un régulateur de pression agissant sur la pression de l'air dans le réservoir et apte à réguler la pression du liquide en sortie du réservoir autour d'une valeur de consigne.

De préférence, la valeur de consigne est donnée par la pression du liquide prise au niveau de la zone de sortie du liquide ou bien au niveau de la partie terminale de la tuyère de sortie, plus précisément avant le dernier coude de la tuyère de sortie 4 lorsqu'un coude est présent.

Le réservoir de stockage comprend une zone de stockage cylindrique à base ronde et une zone de sortie de liquide conique, la zone de sortie de liquide conique formant un angle avec un axe général du réservoir de stockage compris entre 30° et 50°.

Avantageusement, le système de largage peut comprendre un détecteur de gaz en sortie du réservoir de stockage.

De préférence, le système de largage comprend un module de commande agissant sur le régulateur de pression et sur la trappe de largage.

Selon un mode de réalisation particulier, la trappe de largage comprend une buse convergente dont la section de sortie de liquide est variable.

L'invention concerne également un aéronef de lutte contre des incendies, comprenant un système de largage comme décrit précédemment et dans lequel le liquide est un retardant.

D'autres buts, avantages et caractéristiques ressortiront de la description qui va suivre, donnée à titre purement illustratif et faite en référence aux dessins annexés sur lesquels :
[Fig 1] représente un système de largage d'un liquide selon l'invention, comprenant une trappe de largage en position fermée.
[Fig 2] représente le système de largage d'un liquide illustré à la figure 1, comprenant une trappe de largage en position ouverte.
[Fig 3] représente un système de largage d'un liquide selon l'invention, comprenant une tuyère de sortie coudée.
[Fig 4] illustre un premier mode de réalisation d'un diffuseur d'air sous pression d'un système de largage selon l'invention.
[Fig 5] illustre un deuxième mode de réalisation d'un diffuseur d'air sous pression d'un système de largage selon l'invention.
[Fig 6] illustre un troisième mode de réalisation d'un diffuseur d'air sous pression d'un système de largage selon l'invention.
[Fig 7] illustre un quatrième mode de réalisation d'un diffuseur d'air sous pression d'un système de largage selon l'invention.
[Fig 8] illustre une variante du deuxième mode de réalisation du diffuseur d'air sous pression illustré à la figure 5.
[Fig. 9] est une vue en coupe selon un plan vertical d'un mode de réalisation particulier de la trappe de largage en position fermée.
[Fig 10] représente la trappe de largage de la figure 9, en position ouverte au diamètre minimum D1.
[Fig 11] représente la trappe de largage de la figure 9, en position ouverte au diamètre maximum D3.
[Fig 12] est une vue en coupe selon un plan horizontal de la trappe de largage du mode de réalisation illustré à la figure 9, en position fermée en ouverture au diamètre minimum D1.
[Fig 13] représente la trappe de largage illustrée à la figure 11, en position ouverte au diamètre maximum D3.
[Fig 14] illustre un dispositif de châssis autoporteur.

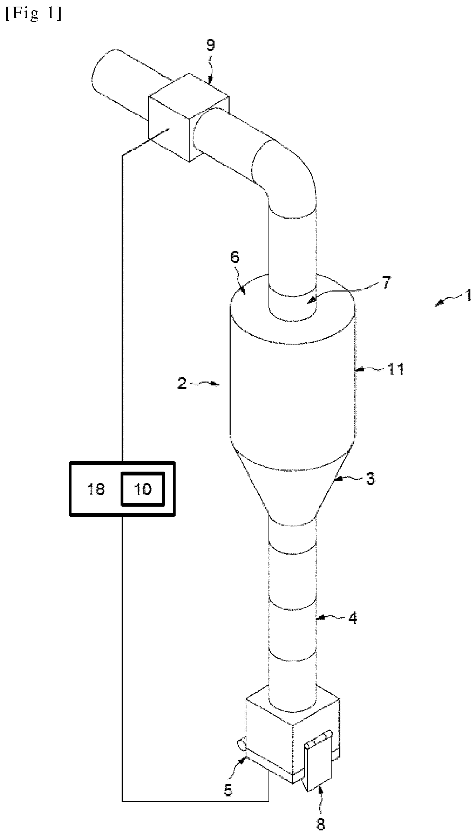

On se réfèrera tout d'abord à la figure 1 illustrant un système de largage de liquide selon l'invention, désigné par la référence numérique générale 1.

Selon les applications, le liquide est notamment une solution contenant de l'eau. Il peut être un retardant utilisé dans le domaine de la lutte contre les incendies, un produit à finalité agricole, météorologique ou encore environnementale, mais également un produit utilisé dans le domaine de l'industrie.

Dans la suite de la description, l'invention s'applique au domaine de la lutte contre les incendies. Le liquide est ainsi un retardant ou de l'eau.

Le système de largage 1 comprend un réservoir de stockage 2 apte à contenir le liquide en vue de son largage hors du système de largage 1.

Le réservoir de stockage 2 comprend une zone de sortie de liquide 3. La zone de sortie de liquide est pourvue d'une tuyère de sortie 4 et d'une trappe de largage 5.

Dans l'exemple illustré, le réservoir de stockage 2 est surmonté d'un couvercle 6 et comprend avantageusement une arrivée d'air 7 qui peut être disposée, comme représenté, au centre du couvercle 6. L'arrivée d'air 7 est de préférence alimentée en air comprimé.

La trappe de largage 5 peut être associée à un loquet 8 de verrouillage de la trappe de largage 5 en position fermée.

De plus, la section de la trappe de largage 5 est préférentiellement déterminée en fonction des proportions du réservoir 2.

La trappe de largage 5 sera, de préférence, une trappe à ouverture instantanée.

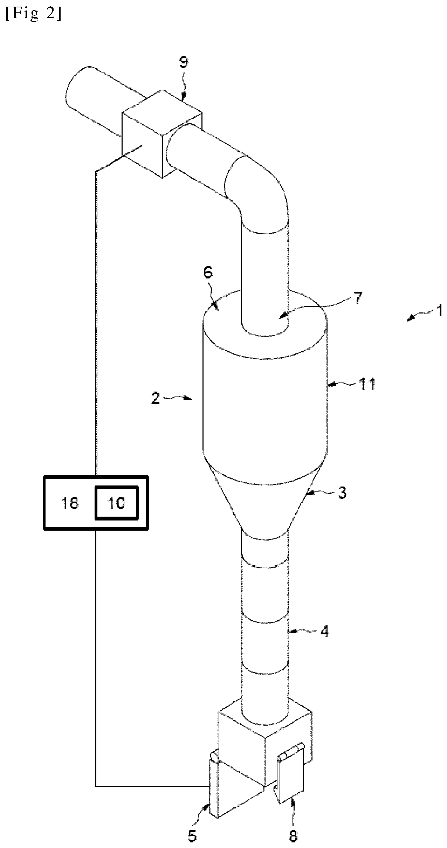

Les figures 1 et 2 illustrent, respectivement, la trappe de largage 5 en position fermée et en position ouverte.

En outre, le système de largage 1 comporte des moyens pour faire varier la pression de l'air dans le réservoir de stockage 2 en fonction de la hauteur de liquide dans le réservoir 2.

A cet égard, le système de largage 1 comprend un régulateur de pression 10 agissant sur la pression de l'air dans le réservoir 2 et apte à réguler la pression du liquide en sortie du réservoir 2 autour d'une valeur de consigne.

On notera au passage qu'initialement, c'est-à-dire préalablement au largage, le liquide remplit le réservoir 2, la zone de sortie de liquide 3 et la tuyère de sortie 4, ce qui permet d'éviter la formation d'un mélange diphasique de gaz et de liquide.

Le régulateur de pression 10 agit sur une électrovanne 9 disposée, de préférence, au niveau d'un conduit d'alimentation en air de l'arrivée d'air 7, en amont de l'arrivée d'air 7. La pression du liquide en sortie du réservoir 2 peut ainsi être ajustée en faisant varier la pression de l'air dans le réservoir 2, elle-même régulée en contrôlant l'ouverture de l'électrovanne 9.

Dans un mode de réalisation particulier, le régulateur de pression 10 agit sur une électrovanne 9 disposée au niveau d'un conduit d'alimentation en air de l'arrivée d'air 7, en amont de l'arrivée d'air 7. Ici, la pression du liquide est prise au moyen d'un capteur de pression disposé de préférence au niveau de la partie convergente de la zone de sortie du liquide ou bien au niveau de la partie horizontale de la tuyère de sortie 4 avant le dernier coude, si un coude est présent, ou bien au niveau de la partie terminale 4a de la tuyère de sortie, si aucun coude n'est présent. Ici, le capteur de pression donne une pression que l'on nommera par la suite P0.
Cet asservissement en fonction de la pression P0 permettra de minimiser les cas d'écoulement diphasique air et liquide. En effet, il a pu être constaté que l'asservissement du régulateur de pression en fonction de P0 permet d'obtenir un meilleur front d'air entre l'air et le liquide, plus net, évitant un écoulement diphasique.

Toujours dans ce mode de réalisation, le régulateur de pression 10 est asservi pour maintenir la pression P0 constante.

Dans un mode de réalisation particulier, la pression P0 permettra d'obtenir une donnée supplémentaire, à savoir la vitesse de débit du liquide.

Cette donnée pourra être traitée par l'opérateur en charge du largage pour optimiser le largage de liquide en fonction notamment de la surface à couvrir, dans le cas par exemple d'un incendie.

Dans un autre mode de réalisation particulier, le régulateur de pression 10 génère une ou plusieurs rampes de pression. La gestion de la pression est assurée par un programme prédéfini à l'avance.

La ou les rampes de pression peuvent être ajustées en fonction des données associées à l'avion telles que le facteur de charge, l'assiette, ou encore la pression extérieure.

De préférence, le système de largage 1 comprend une pluralité de capteurs de pression, non représentés sur les figures. Les capteurs de pression seront avantageusement disposés sur la partie haute, sur la partie centrale et sur la partie basse du réservoir de stockage 2 mais également sur la zone de sortie de liquide 3 et au niveau de la tuyère de sortie 4, notamment au niveau de la partie terminale 4a de la tuyère de sortie 4. Toutefois, en présence d'un ou plusieurs coudes, les capteurs de pression seront avantageusement disposés en amont du dernier coude.

Les capteurs de pression permettront ainsi de calculer la pression dans les différentes zones du réservoir 2.

Le réservoir de stockage 2 comprend une zone de stockage 11 cylindrique à base ronde.

De plus, la zone de sortie de liquide 3 est conique.

Cette configuration du réservoir de stockage 2 permet de minimiser les perturbations sur le flux de liquide sortant et permet, par conséquent, d'éviter un écoulement diphasique air et liquide, au profit d'un écoulement monophasique.

Afin de minimiser encore les perturbations, la zone de sortie de liquide 5 conique forme un angle avec un axe général du réservoir de stockage 2 compris entre 30° et 50°, de préférence 30°C.

Dans l'expression « compris entre », les bornes du domaine de valeurs sont comprises dans ce domaine.

Lorsque le système de largage 1 est, par exemple, monté sur un aéronef pour un largage du liquide par voie aérienne il pourra être nécessaire, selon les dimensions du réservoir de stockage 2, de disposer le réservoir de stockage 2 au niveau du centre de gravité de l'aéronef afin de diminuer l'impact du largage qui pourrait entraîner la perte de contrôle de l'aéronef.

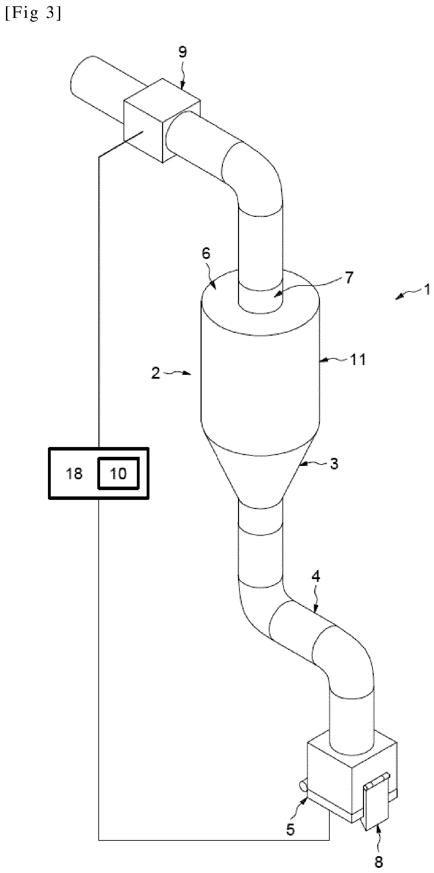

Tel qu'illustré à la figure 3, la tuyère de sortie 4 peut ainsi être coudée ce qui permet de réaliser un déport de la trappe de largage 5 par rapport au réservoir de stockage 2 et de positionner la trappe de largage 5 à un emplacement déterminé en fonction des contraintes architecturales de l'aéronef.

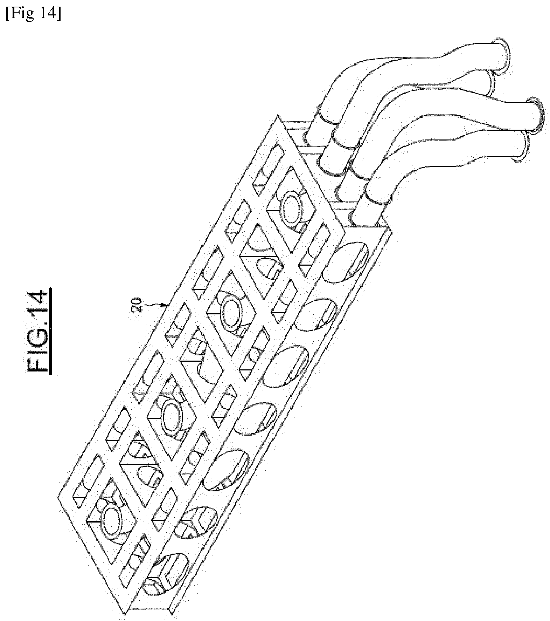

Dans un mode de réalisation alternatif, par exemple, toujours monté sur un aéronef, un dispositif de châssis autoporteur 20, tel qu'illustré à la figure 14, pourra être monté dans l'aéronef pour permettre une répartition optimale des charges constituées notamment par le réservoir de stockage 2 et les différentes tuyauteries, notamment la tuyère de sortie 4.

Un dispositif de châssis autoporteur permettra d'éviter des problèmes de déséquilibre lors du largage du liquide

Un dispositif de châssis autoporteur permettra l'installation d'un dispositif de récupération des liquides provenant de fuites éventuelles du système.

Avantageusement, les moyens pour faire varier la pression de l'air dans le réservoir comprennent en outre un diffuseur d'air sous pression apte à répartir l'alimentation en air sur la surface du liquide et ainsi empêcher la formation de tourbillons de vidange lors du largage du liquide.

Le diffuseur d'air sous pression est de préférence disposé en partie haute du réservoir de stockage 2, en amont du liquide et en aval de l'arrivé d'air 7.

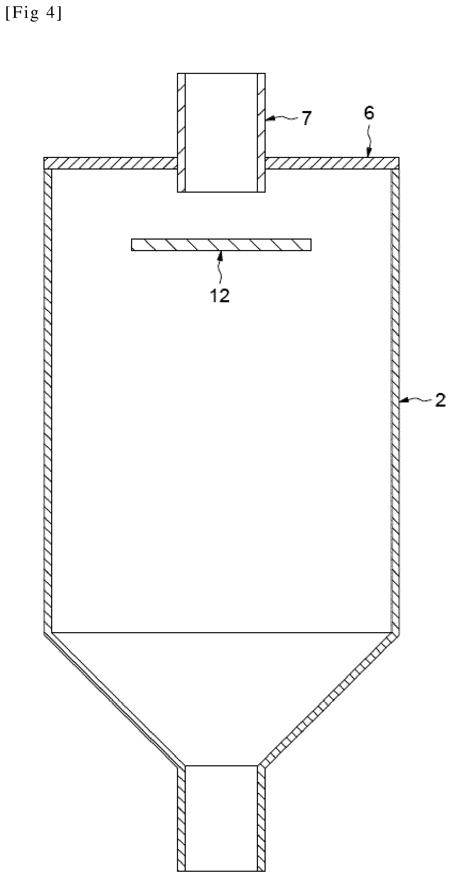

La figure 4 représente le réservoir de stockage 2 comprenant un premier mode de réalisation dans lequel le diffuseur d'air sous pression comporte un disque 12 disposé en aval, à distance l'arrivée d'air 7 dans le réservoir 2. Le disque 12 est disposé de façon perpendiculaire à l'arrivée d'air 7 et donc perpendiculaire au flux d'air pénétrant le réservoir de stockage 2 via l'arrivée d'air 7.

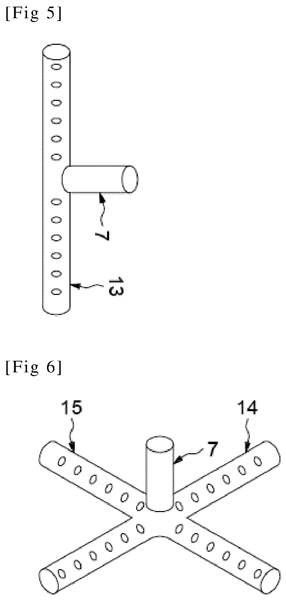

La figure 5 illustre un deuxième mode de réalisation dans lequel le diffuseur d'air sous pression comprend un tube 13 disposé perpendiculairement à l'arrivée d'air 7 alimentant le tube 13 en air.

La figure 6 illustre un troisième mode de réalisation dans lequel le diffuseur d'air comprend deux tubes 14 et 15 disposés perpendiculairement à l'arrivée d'air 7 qui alimente le diffuseur en air. Les tubes 14 et 15 sont disposés de façon que leurs axes longitudinaux forment entre eux un angle non nul, de préférence 90°C.

On pourra prévoir que le diffuseur d'air comprenne un nombre de tubes supérieur à deux.

Les axes longitudinaux des deux tubes 14 et 15 se croisent en un point de connexion situé au centre des tubes 14 et 15, formant une croix. L'arrivée d'air 7 alimente les tubes 14 et 15 au niveau dudit point de connexion.

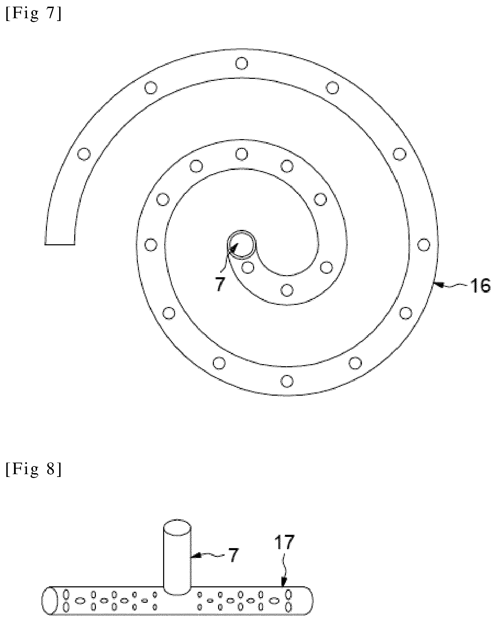

La figure 7 représente un quatrième mode de réalisation dans lequel le diffuseur d'air sous pression a une forme de spirale. Dans l'exemple illustré, un conduit 16 s'étend de façon à former une spirale et est alimenté en air par l'arrivée d'air 7 au centre de la spirale.

De préférence, et comme cela est illustré sur les figures 5, 6 et 7, le diffuseur d'air sous pression peut comprendre une pluralité de trous disposés préférentiellement de façon homogène sur le diffuseur.

La pluralité de trous est ainsi orientée de façon à créer une forte et homogène agitation à la surface du liquide, notamment dans la zone centrale du réservoir de stockage 2, afin d'empêcher la formation de tourbillons de vidange qui pourrait augmenter au fur et à mesure que la hauteur du liquide diminue.

La figure 8 représente un diffuseur d'air sous pression comprenant un tube 17 disposé perpendiculairement à l'entrée d'air 7 comme cela est illustré à la figure 5. En variante, le tube 17 comporte une pluralité de trous dont la taille augmente progressivement au fur et à mesure que l'on s'éloigne du centre du tube et que l'on approche des extrémités, de manière à perturber plus encore la surface du liquide. L'exemple est illustré sur un diffuseur comportant un tube. Bien entendu, on pourra appliquer cette configuration à tout type de forme du diffuseur d'air.

Dans un mode de réalisation particulier, on pourra réduire les besoins en pressurisation entre la zone de sortie du liquide 3 et la trappe de largage 5 en augmentant la différence d'altitude entre la zone de sortie du liquide 3 et la trappe de largage 5.

Plus précisément, la différence d'altitude entre l'extrémité basse de la zone de sortie du liquide 3 et le niveau de la trappe de largage 5 sera notée H0. Plus H0 sera importante, moins les besoins en pressurisation, apportées notamment par un diffuseur d'air sous pression seront nécessaires. Cette structure spécifique permet d'éviter une structure lourde que peut constituer les moyens de pressurisations.

Comme cela est représenté sur les figures 1 à 3, le système de largage 1 comprend un module de commande 18 intégrant le régulateur de pression 10 et agissant sur la trappe de largage 5.

Par exemple, le régulateur 10 est un régulateur de type proportionnel-intégral-dérivé (PID) apte à réguler la pression régnant dans le réservoir 2 autour d'une valeur de consigne, à partir de valeur de pression mesurée, en agissant sur l'électrovanne 9.

Dans l'exemple illustré, le module de commande 18 est relié aux capteurs de pression.

La pression est mesurée au niveau de la partie convergente de la zone de sortie du liquide 3 ou bien au niveau de la partie horizontale de la tuyère de sortie 4 avant le dernier coude, si un coude est présent, ou bien au niveau de la partie terminale 4a de la tuyère de sortie, si aucun coude n'est présent. Lorsque la pression mesurée s'écarte de la valeur de consigne, le module de commande 18 pourra ajuster le débit d'air entrant dans le réservoir de stockage 2 via le régulateur de pression 10 qu'il commande. Le régulateur de pression 10 contrôlera en conséquence l'ouverture de l'électrovanne 9.

Le débit de sortie du liquide est directement proportionnel à la pression du liquide en sortie du réservoir 2. En maintenant la pression du liquide en sortie du réservoir 2, soit au niveau de la partie convergente de la zone de sortie du liquide, soit au niveau de la partie horizontale de la tuyère de sortie 4 avant le dernier coude, si un coude est présent, soit au niveau de la partie terminale 4a de la tuyère de sortie, si aucun coude n'est présent, autour d'une valeur de consigne il est possible de maintenir le débit de sortie du liquide constant.

Ainsi, la pression de l'air dans le réservoir de stockage 2 est ajustée, dans l'exemple illustré par le module de commande 18, de manière à compenser la diminution de la pression en bas du réservoir 2 provoquée par la diminution de la hauteur du liquide lors du largage. Cette régulation permet de maintenir une pression constante en sortie de réservoir 2 et, par conséquent, de maintenir un débit de sortie et une vitesse de sortie de liquide constants. En assurant une vitesse et un débit de largage constant, on assure une largeur de largage et par conséquent une empreinte de largage constante.

L'empreinte résultante faite par le liquide sur la zone à couvrir par le liquide sera par conséquent homogène et régulière.

Un tel système de largage 1 permet également de compenser les variations de facteur de charge subit par un aéronef en mouvement dans le cas où le système de largage 1 de liquide est installé sur un aéronef.

Lorsque la pression en sortie du réservoir 2 s'écarte de façon importante de la valeur de consigne, le module de commande 18 pourra être configuré pour refermer la trappe de largage 5. On évite ainsi le largage inutile du retardant dont le coût est relativement important.

Comme rappelé plus haut, dans un mode de réalisation alternatif, la valeur de consigne est donnée par la pression P0.

Dans un mode de réalisation particulier, la trappe de largage 5 comprend une buse convergente et/ou une structure en nid d'abeille à travers laquelle le liquide peut passer.

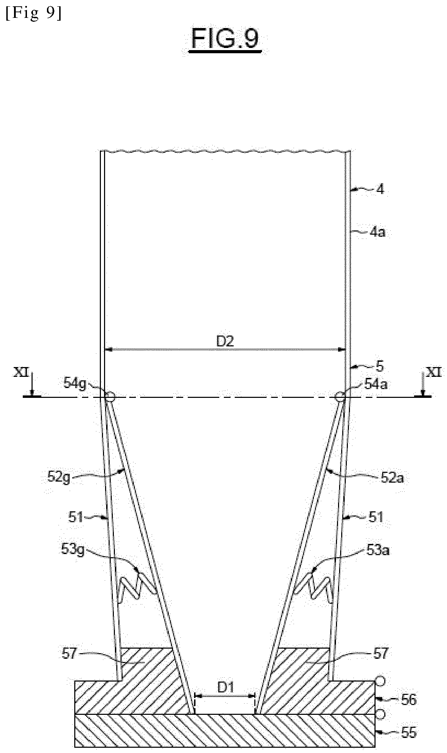

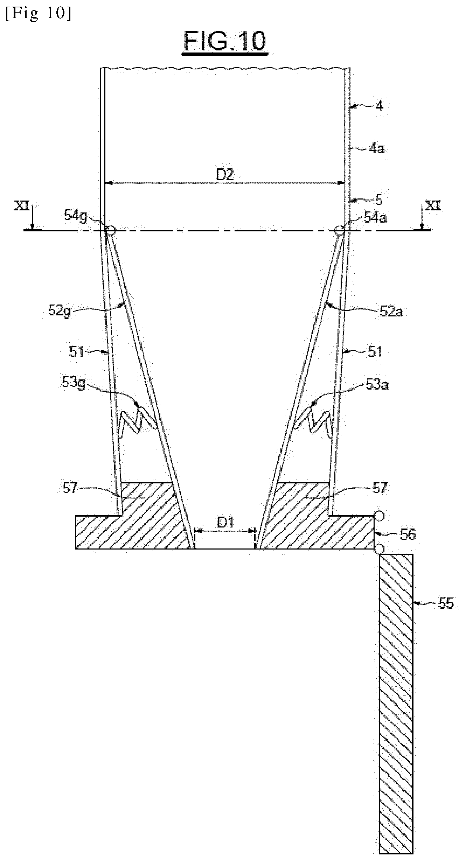

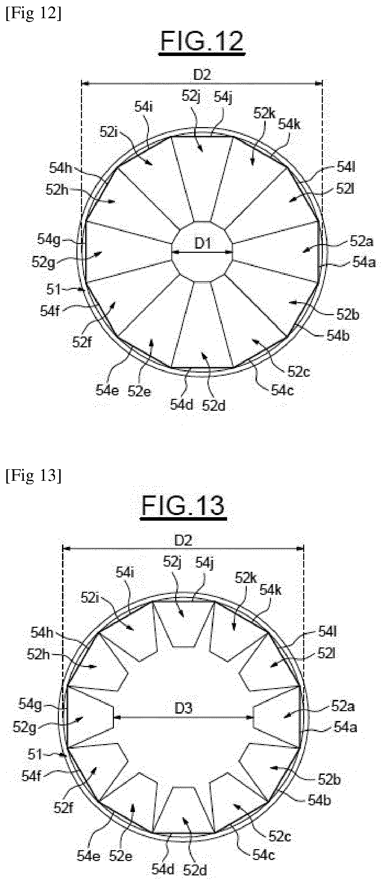

Dans un mode de réalisation particulier illustré aux figures 9 à 14, la trappe de largage comprend une buse convergente dont la section de sortie du liquide est variable.

La section de sortie de liquide peut avoir deux diamètres : un diamètre minimal de sortie D1 et un diamètre maximal de sortie D3.

En référence aux figures 9 à 14, la trappe de largage comprend ici une structure en forme de cône tronqué au sommet formée par une paroi fixe 51. Plus précisément, la surface interne de ce cône tronqué au sommet comprend plusieurs parois mobiles aussi appelés volets 52a, 52b, 52c, 52d, 52e, 52f, 52g, 52h, 52i, 52j, 52k et 521, douze parois mobiles dans l'exemple illustré, montées à rotation sur la surface interne par leur extrémité supérieure. Seules deux parois mobiles 52a, 52g opposées sont représentées car il s'agit d'une représentation en coupe.

Les parois mobiles 52a à 521 de ce cône tronqué au sommet sont maintenues à distance de la surface interne de la paroi 51 au moyen de ressorts de maintien en position 53a à 531 et définissent ainsi un diamètre minimal de sortie D1, l'extrémité libre des parois mobiles 52a à 521 formant une section de sortie de liquide de diamètre variable.

Les parois mobiles 52a, 52b sont montées à rotation au moyen de dispositifs de pivotement, ici des charnières 54a à 541.

De préférence, les parois mobiles 52a à 52g ou volets sont des trapèzes isocèles, le côté le plus large des deux côtés opposés parallèles du trapèze correspondant à l'extrémité montées à rotation sur la paroi fixe 51. La sortie de la trappe de largage 5 comprend deux plaques de verrouillage. Une première plaque de verrouillage 55 ferme l'ouverture formée par l'extrémité libre des parois latérales fixes 51a, 51b et permet d'empêcher toute sortie de liquide, lorsqu'elle est en position fermée.

Une deuxième plaque de verrouillage 56 est montée en amont de la première plaque de verrouillage 55, par rapport à la direction de sortie du liquide. La deuxième plaque de verrouillage 56 correspond à une paroi ouverte en son centre, l'ouverture étant de diamètre D1.

Ici, le pourtour de l'ouverture de la deuxième plaque de verrouillage 56 forme une butée 57 des volets 52a à 521 qui, lorsque la deuxième plaque de verrouillage 56 est en position fermée, empêchent les volets de former une section de largage supérieure au diamètre D1.

Les première et deuxième plaques de verrouillage 55 et 56 sont chacune verrouillées en position fermée par un loquet 8 comme décrit plus haut et non représenté sur la figure 9 mais représenté sur les figures 1 à 3.

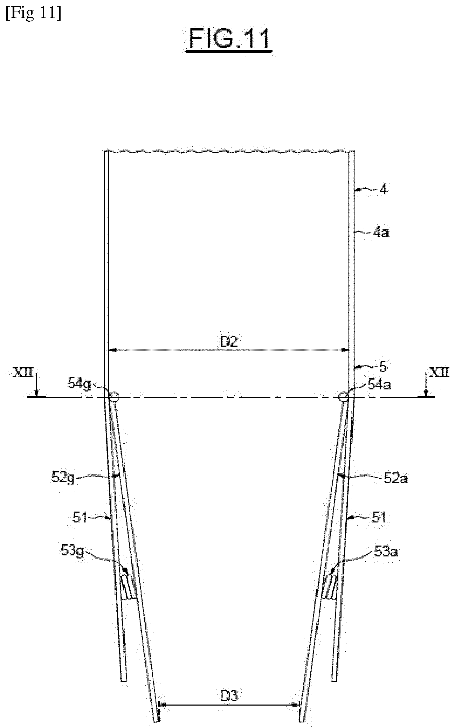

Lorsque le loquet 8 associé à la première plaque de verrouillage 55 et le loquet 8 associé à la deuxième plaque de verrouillage 56 sont actionnés, les première et deuxième plaques de verrouillage 55 et 56 pivotent chacune autour d'une charnière et le liquide se déverse selon une section de largage de diamètre pouvant aller jusqu'au diamètre D3, inférieur au diamètre D2 de la tuyère de sortie 4. La figure 11 illustre la trappe de largage 5 en position ouverte, lorsque les deux plaques de verrouillage 55 et 56 sont ouvertes. Lorsque les plaques de verrouillage 55 et 56 sont ouvertes, les ressorts 53a à 531 sont tarés pour ne pas opposer de résistance à l'ouverture des plaques 52a à 52l lorsqu'un flux de liquide existe permettant ainsi de former une section de largage au diamètre D3.

Les ressorts sont tarés pour repousser les plaques 52a à 521 en position de repos quand la tuyère de sortie 4 est vide, formant une ouverture de section D1 qui permettra de repositionner la plaque de verrouillage 56 en position fermée.

Plus la force exercée sur les parois mobiles 52a à 521, et donc sur le ressort, est importante, plus la section de sortie du liquide est grande. Moins la force exercée sur les parois mobiles est importante, plus la section de sortie du liquide est faible.

Lorsque la deuxième plaque de verrouillage 56 est en position fermée et la première plaque de verrouillage 55 est en position ouverte, le liquide se déverse au travers de l'ouverture de la deuxième plaque de verrouillage 56. Compte tenu de la butée de maintien 57, le diamètre de la section de sortie de liquide n'excède pas le diamètre D1.

Un détecteur de gaz 19 peut être prévu en sortie du réservoir de stockage 2 afin de détecter un écoulement diphasique du liquide résultant du mélange de l'air avec le liquide.

Par ailleurs, le réservoir de stockage peut comprendre un clapet de surpression.

Comme indiqué précédemment, on pourra prévoir que le système de largage 1 de liquide soit mis en place sur un aéronef de lutte contre des incendies, dans lequel le liquide sera un retardant.

On pourra également prévoir que le système de largage 1 de liquide soit utilisé pour une application autre que la lutte contre les incendies.

Le système de largage 1 pourra par exemple être utilisé en industrie, ou dans le largage, par voie aérienne ou non, de produit agricole, météorologique ou encore environnemental.

Le liquide à larguer pourra alors être, par exemple, un pesticide, un dissolvant ou encore un liquide de traitement de nappes pétrolière.

Dans le système de largage 1 de liquide, la source principale pour le largage est la gravité. Le système de largage reposant ainsi sur des moyens simples, offre en outre la possibilité de maintenir un débit et une vitesse d'écoulement du liquide constants. L'apparition de perturbations de l'écoulement du liquide est écartée et la fin du largage est effectué sans perte d'efficacité conduisant à un taux de recouvrement par le liquide sur la zone à couvrir amélioré.

## Revendications

1. Système de largage d'un liquide, comprenant un réservoir de stockage (2) du liquide doté d'une zone de sortie de liquide (3) pourvue d'une tuyère de sortie (4) et d'une trappe de largage (5), le système de largage comporte des moyens pour faire varier la pression de l'air dans le réservoir de stockage (2) en fonction de la hauteur de liquide dans le réservoir (2), **caractérisé en ce que** le réservoir de stockage (2) comprend une zone de stockage (11) cylindrique à base ronde et la zone de sortie de liquide (3) qui est conique, la zone de sortie de liquide (3) conique formant un angle avec un axe général du réservoir de stockage (2) compris entre 30° et 50°.

2. Système de largage selon la revendication 1, dans lequel les moyens pour faire varier la pression de l'air dans le réservoir (2) comprennent un diffuseur d'air sous pression apte à répartir l'alimentation en air sur la surface du liquide.

3. Système de largage selon la revendication 2, dans lequel le diffuseur d'air sous pression a une forme de spirale.

4. Système de largage selon la revendication 2, dans lequel le diffuseur d'air comprend au moins un tube (13) disposé perpendiculairement à une arrivée d'air (7) alimentant le diffuseur en air.

5. Système de largage selon la revendication 2, dans lequel le diffuseur d'air comprend au moins deux tubes (14, 15) disposés perpendiculairement à une arrivée d'air (7) alimentant le diffuseur en air, les tubes (14, 15) étant disposés de sorte que les axes longitudinaux des tubes (14, 15) forment entre eux un angle non nul.

6. Système de largage selon la revendication 2, dans lequel le diffuseur d'air comprend un disque disposé dans le réservoir de stockage (2) en aval et à distance d'une arrivée d'air (7) et perpendiculaire à ladite arrivée d'air (7).

7. Système de largage selon la revendication 1 à 6, dans lequel la tuyère de sortie 4 est coudée.

8. Système de largage selon l'une quelconque des revendications 2 à 7, **caractérisé en ce qu'**il comprend un régulateur de pression agissant sur la pression de l'air dans le réservoir (2) et apte à réguler la pression du liquide en sortie du réservoir (2) autour d'une valeur de consigne.

9. Système de largage selon la revendication 8, **caractérisé en ce que** la valeur de consigne est donnée par la pression (P0) du liquide prise au niveau de la partie convergente de la zone de sortie du liquide, ou bien au niveau de la partie horizontale de la tuyère de sortie (4) avant le dernier coude, si un coude est présent, ou bien au niveau de la partie terminale (4a) de la tuyère de sortie (4), si aucun coude n'est présent.

10. Système de largage selon l'une quelconque des revendications 1 à 9, comprenant un détecteur de gaz (19) en sortie du réservoir de stockage (2).

11. Système de largage selon l'une quelconque des revendications 8, 9, ou 10 lorsque cette dernière dépend de la revendication 8, ₗa comprenant un module de commande (18) agissant sur le régulateur de pression (10) et sur la trappe de largage (5).

12. Système de largage selon l'une quelconque des revendications 1 à 11, **caractérisé en ce que** la trappe de largage (5) comprend une buse convergente dont la section de sortie de liquide est variable.

13. Aéronef de lutte contre des incendies, comprenant un système de largage (1) selon l'une quelconque des revendications 1 à 12, et dans lequel le liquide est un retardant.

## Patentansprüche

1. Abwurfsystem für eine Flüssigkeit, umfassend einen Speicherbehälter (2) für die Flüssigkeit, der mit einem Flüssigkeitsauslassbereich (3) ausgestattet ist, der mit einer Auslassdüse (4) und einer Abwurfklappe (5) versehen ist, wobei das Abwurfsystem Mittel zum Variieren des Luftdrucks im Speicherbehälter (2) in Abhängigkeit von der Höhe der Flüssigkeit im Behälter (2) aufweist, **dadurch gekennzeichnet, dass** der Speicherbehälter (2) einen zylindrischen Speicherbereich (11) mit rundem Boden und den konischen Flüssigkeitsauslassbereich (3) umfasst, wobei der konische Flüssigkeitsauslassbereich (3) einen Winkel mit einer allgemeinen Achse des Speicherbehälters (2) zwischen 30° und 50° bildet.

2. Abwurfsystem nach Anspruch 1, wobei die Mittel zum Variieren des Luftdrucks im Behälter (2) einen Druckluftdiffusor umfassen, der geeignet ist, die Luftzufuhr auf die Oberfläche der Flüssigkeit zu verteilen.

3. Abwurfsystem nach Anspruch 2, wobei der Druckluftdiffusor eine Spiralform aufweist.

4. Abwurfsystem nach Anspruch 2, wobei der Luftdiffusor mindestens ein Rohr (13) umfasst, das senkrecht zu einem Lufteinlass (7) angeordnet ist, der den Luftdiffusor mit Luft versorgt.

5. Abwurfsystem nach Anspruch 2, wobei der Luftdiffusor mindestens zwei Rohre (14, 15) umfasst, die senkrecht zu einem Lufteinlass (7), der den Luftdiffusor versorgt, angeordnet sind, wobei die Rohre (14, 15) so angeordnet sind, dass die Längsachsen der Rohre (14, 15) zueinander einen Winkel ungleich Null bilden.

6. Abwurfsystem nach Anspruch 2, wobei der Luftdiffusor eine Scheibe umfasst, die im Speicherbehälter (2) stromabwärts und entfernt von einem Lufteinlass (7) und senkrecht zu diesem Lufteinlass (7) angeordnet ist.

7. Abwurfsystem nach Anspruch 1 bis 6, wobei die Auslassdüse 4 gebogen ist.

8. Abwurfsystem nach einem der Ansprüche 2 bis 7, **dadurch gekennzeichnet, dass** es einen Druckregler umfasst, der auf den Luftdruck im Behälter (2) wirkt und geeignet ist, den Druck der Flüssigkeit an dem Ausgang des Behälters (2) um einen Sollwert herum zu regeln.

9. Abwurfsystem nach Anspruch 8, **dadurch gekennzeichnet, dass** der Sollwert durch den Druck (P0) der Flüssigkeit bestimmt wird, der an dem konvergierenden Teil des Auslassbereichs der Flüssigkeit oder an dem horizontalen Teil der Auslassdüse (4) vor der letzten Biegung, wenn eine Biegung vorhanden ist, oder an dem Endteil (4a) der Auslassdüse (4), wenn keine Biegung vorhanden ist, gemessen wird.

10. Abwurfsystem nach einem der Ansprüche 1 bis 9, umfassend einen Gasdetektor (19) an dem Ausgang des Speicherbehälters (2).

11. Abwurfsystem nach einem der Ansprüche 8, 9 oder 10, wenn letzteres von Anspruch 8 abhängt, umfassend ein Steuermodul (18), das auf den Druckregler (10) und die Abwurfklappe (5) wirkt.

12. Abwurfsystem nach einem der Ansprüche 1 bis 11, **dadurch gekennzeichnet, dass** die Abwurfklappe (5) eine konvergierende Düse umfasst, deren Flüssigkeitsauslassquerschnitt variabel ist.

13. Brandbekämpfungsflugzeug, umfassend ein Abwurfsystem (1) nach einem der Ansprüche 1 bis 12, und wobei die Flüssigkeit ein Feuerschutzmittel ist.

## Claims

1. A liquid dropping system, comprising a liquid storage reservoir (2) provided with a liquid outlet area (3) provided with an outlet nozzle (4) and a dropping hatch (5), the dropping system comprises means for varying the pressure of the air in the storage reservoir (2) depending on the level of liquid in the reservoir (2), **characterised in that** the storage reservoir (2) comprises a cylindrical storage area (11) with a round base and the liquid outlet area (3)which is conical, the conical liquid outlet area (3) forming an angle with a general axis of the storage reservoir (2) comprised between 30° and 50°.

2. The dropping system according to claim 1, wherein the means for varying the air pressure in the reservoir (2) comprise a pressurised air diffuser capable of distributing the air supply over the surface of the liquid.

3. The dropping system according to claim 2, wherein the pressurised air diffuser has a spiral shape.

4. The dropping system according to claim 2, wherein the air diffuser comprises at least one tube (13) disposed perpendicular to an air intake (7) supplying the diffuser with air.

5. The dropping system according to claim 2, wherein the air diffuser comprises at least two tubes (14, 15) disposed perpendicular to an air intake (7) supplying the diffuser with air, the tubes (14, 15) being disposed so that the longitudinal axes of the tubes (14, 15) form therebetween a non-zero angle.

6. The dropping system according to claim 2, wherein the air diffuser comprises a disc disposed in the storage reservoir (2) downstream and at a distance from an air intake (7) and perpendicular to said air intake (7).

7. The dropping system according to claim 1 to 6, wherein the outlet nozzle 4 is bent.

8. The dropping system according to any one of claims 2 to 7, **characterised in that** it comprises a pressure regulator acting on the air pressure in the reservoir (2) and able to regulate the pressure of the liquid leaving the reservoir (2) around a set value.

9. The dropping system according to claim 8, **characterised in that** the set value is given by the pressure (P0) of the liquid taken at the converging portion of the liquid outlet area, or else at the horizontal portion of the outlet nozzle (4) before the last bend, if a bend is present, or at the terminal portion (4a) of the outlet nozzle (4), if no bend is present.

10. The dropping system according to any one of claims 1 to 9, comprising a gas detector (19) at the outlet of the storage reservoir (2).

11. The dropping system according to any one of claims 8, 9 or 10, when the latter depends on claim 8, comprising a control module (18) acting on the pressure regulator (10) and on the dropping hatch (5).

12. The dropping system according to any one of claims 1 to 11, **characterised in that** the dropping hatch (5) comprises a converging nozzle the liquid outlet section of which is variable.

13. A firefighting aircraft, comprising a dropping system (1) according to any one of claims 1 to 12, and wherein the liquid is a retardant.
